# NEUE EUROPÄISCHE PATENTSCHRIFT

(11) **EP 1 028 512 B2**
(45) Veröffentlichungstag und Bekanntmachung des Hinweises auf die Entscheidung über den Einspruch: **03.07.2019**
(45) Hinweis auf die Patenterteilung: 14.04.2010
(21) Anmeldenummer: 99118513.3
(22) Anmeldetag: 18.09.1999
(51) Int. Cl.: H02J 4/00, H02J 3/14, H02J 1/14

(54) **Vorrichtung zur Stromversorgung von elektrischen Verbrauchern, die an Sitzen in einem Flugzeug zugeordneten dezentralen Stromversorgungseinheiten angeschlossen sind**
Power supply device for electric consumers connected to decentralised power supply units assigned to seats in an aircraft
Dispositif d'alimentation des consommateurs électriques connectés à des unités d'alimentation en courant décentralisées assignées aux sièges dans un avion

(30) Priorität: 12.02.1999 DE 19906076
(43) Veröffentlichungstag der Anmeldung: 16.08.2000
(73) Patentinhaber: KID-Systeme GmbH, 21614 Buxtehude (DE)
(72) Erfinder: Linnemann, Dirk, 21077 Hamburg (DE); Dammann, Jens, 21635 Jork (DE); Mosebach, Dieter, 21720 Mittelnkirchen (DE)
(74) Vertreter: Bird & Bird LLP

(56) Entgegenhaltungen:
- US-A- 4 090 088
- US-A- 4 090 088
- US-A- 4 206 443
- US-A- 4 206 443
- US-A- 4 213 058
- US-A- 4 402 059
- US-A- 4 868 412
- US-A- 5 754 445
- GARDNER E: "Load management DSM: past, present and future", PROCEEDINGS OF THE NINTH SYMPOSIUM ON IMPROVING BUILDING SYSTEMS IN HOT AND HUMID CLIMATES., May 1994 (1994-05), ARLINGTON TX
- Druckexemplar der Anmeldung EP99118513.3 des Patents EP1028512 B1
- Auszüge aus dem Buch 'The Ninth Symposium on improving Building Systems in hot and humid Climates'.
- Mohammad S Al-Homoud: "Optimum thermal design of air-conditioned residential buildings", BUILDING AND ENVIRONMENT, vol. 32, no. 3, 1 May 1997 (1997-05-01), pages 203-210, XP055413517,

## Beschreibung

Die Erfindung betrifft eine Vorrichtung zur Leistuhgsversorgung von elektrischen Verbrauchern, die an Sitzen in einem Flunzeug angeordneten dezentralen Stromversorgungseinheiten angeschlossen sind, unter Verwendung einer zentralen Leistungsverteilungs-Einheit, die von der zentralen Flunzeug-Stromversorgung gespeist wird und die die dezentralen Stromversorgungseihheiten mit elektrischer Leistung versorgt, wobei eine Begrenzung der Anzahl von gleichzeitig eingeschalteten Verbrauchern in Abhängigkeit von vordefinierten Lastgrenzen erfolgt, wobei die zentrale Leistungsverteilungs-Eihheit eine Leistungsmessungs- und eine Vergleichseinrichtung auf weist zur Ermittlung der von den jeweils einem Sitz zugeordneten eingeschalteten Verbrauchern abgenommenen elektrischen Leistung zum Vergleich mit einer durch vorgegebene Grenzwerte einstellbaren Maximalleistung.

In Flugzeugen ist die zur Verfügung stehende elektrische Leistung limitiert. Damit die vorhahdene elektrische Leistung durch zuviele gleichzeitig eingeschaltete Verbraucher nicht überschritten wird, sind verschiedene Methoden zur Vermeidung dieses Problems bekannt. So ist zum einen die Abschaltung von vorher definierten Verbrauchern, abhängig von der jeweils theoretisch verfügbaren Last, oder zum anderen die Limitierung der gleichzeitig einschaltbaren Verbraucher, abhängig von vorher definierten Lastgrenzen, möglich.

Eine von der zweiten Möglichkeit Gebrauch machende Vorrichtung der eingangs genannten Art ist in der US-PS 5,754,445 beschrieben. Diese Vorrichtung weist ein Verteilungs- und Handhabungssysytem von elektrischer Leistung auf, dessen Anwendung in Flugzeugen, Schiffen oder Bahnen vorgesehen ist. Das System enthält einen Lastverteilungsschaltkreis, der zusammen mit einer Leistungseinheit eine Vielzahl von Leistungsausgängen mit elektrischer Leistung versorgt. Wenn zusätzliche Leistungsausgänge versorgt werden sollen, mißt das System den an die Leistungsausgänge zu liefernden Leistungsbetrag, wobei die zusätzlichen Leistungsausgänge dann mit elektrischer Leistung versorgt werden, wenn die benötigte Leistung unterhalb eines maximalen Leistungsbetrages liegt. Zusätzliche Leistungsausgänge können dann nicht versorgt werden, wenn der Betrag der benötigten Leistung oberhalb des maximalen Leistungsbetrages liegt. Von Nachteil ist, daß eine einwandfreie Funktion der Vorrichtung nur dann gegeben ist, wenn die Verbraucher nicht gleichzeitig zugeschaltet werden. Bei gleichzeitiger Zuschaltung von mehreren Verbrauchern besteht die große Gefahr, daß die Leistungsaufnahme eine vorgegebene Maximalleistung überschreiten kann.

Aus der US-A-4 868 412 ist ein Regelungssystem für ein elektrisches Energiesystem bekannt, bei dem eine Vielzahl von unabhängigen Regelungselementen jeweils befähigt ist, einen Zufallswert zu erzeugen und eine Zeitverzögerung als Funktion von diesem Zufallswert zu bestimmen. Jedes Regelungselement greift auf die Größe eines ermittelten Parameters zu und reagiert auf diese Größe zu einer durch einen Zufallswert bestimmten Zeit. Wenn eine Korrektur eines ermittelten Parameters erforderlich ist, ermittelt jedes unabhängige Regelungselement den Bedarf einer Korrektur und verzögert durch einen Zeitbetrag, der zufällig und unabhängig von allen anderen ist. Nachdem die zufällig bestimmte Zeitverzögerung für jedes Regelungselement verstrichen ist, greift dieses Regelungselement wieder auf die Größe des ermittelten Parameters zu und es ändert sich der Verbindungsstatus eines zugeordneten Schalters, wenn eine Korrektur weiterhin erforderlich ist.

Der Erfindung liegt nun die Aufgabe zugrunde, eine Vorrichtung der eingangs genannten Art zu schaffen, bei der die Leistungsversorgung von elektrischen Verbrauchern in einem Flugzeug nur dann ermöglicht wird, wenn eine vorgegebene zulässige Maximalleistung noch nicht erreicht ist, wobei ein gleichzeitiger Zuschalten mehrerer Verbraucher vermeiden wird.

Die Aufgabe wird erfindungsgemäß dadurch gelöst, daß
- jede einem Sitzplatz zugeordnete dezentrale Stronversorgungseinheit eine mit einem Schalter und mit einer Schaltlogik zusammenwirkende zufallsabhängige Zeitverzögerungseinheit aufweist, und daß
- eine Freischaltung von mindestens einem an seine jeweilige dezentrale Stromversorgunseinheit angeschlossenen Verbraucher durch Setzen einer vor dem Verbräucher zu der Schaltlogik der zügehörigen Stromversorgungseinheit geführten Statusleitung und, sofern die ermittelte Maximalleistung noch nicht erreicht ist, nach Verstreichen einer zufallsabhängigen Zeit erfolgt.

Es kann zudem vorgesehen sein, daß
- beim Erreichen bzw. Überschreiten der Maximalleistung eine Statusleitung gesetzt wird, die den Stromversorgunseinheiten die Nichtzuschaltbarkeit weiterer nachträglich angeschlossener Verbraucher signalisiert, oder daß
- nach Abschaltung mindestens eines Verbrauchers die Statusleitung den Stromversorgungseinheiten die Zuschaltbarkeit weiterer angeschlossener Verbraucher nach Verstreichen einer zufallsabhängigen Zeit signalisiert.

Ein wesentlicher Vorteil der Erfindung liegt darin, daß von den Verbrauchern, auch bei einer gleichzeitigen Zuschaltung von mehreren Verbrauchern, eine elektrische Leistung, die eine vorgegebene Maximalleistung überschreitet, nicht abgenommen werden kann. Eine Leistungsfreigabe für einen Verbraucher erfolgt - unter den Voraussetzungen, daß der Verbraucher angeschlossen ist und daß die Statusleitung signalisiert, daß die zulässige maximale Leistung noch nicht erreicht ist - nach Ablauf einer zufallsabhängigen Zeitdauer. Dieses bedeutet eine Auswahl des zu versorgenden Verbrauchers nach dem Zufallsprinzip. Kann beispielsweise bei neunzehn maximal Verbrauchern lediglich für die ersten zehn Verbraucher gleichzeitig elektrische Leistung zur Verfügung gestellt werden, so können die unversorgten Verbraucher erst nach Abschalten von mindestens einem versorgten Verbraucher elektrische Leistung erhalten. Wird einer der von den zehn zuerst zugeschalteten Verbraucher ausgeschaltet, so signalisiert die Statusleitung, daß die maximal zulässige Leistung nicht erreicht ist und somit weitere Verbraucher zuschaltbar sind. Gemäß der vorliegenden Erfindung wird dann einer der bereits angeschlossenen Vebraucher freigeschaltet. Welcher dieses ist, hängt - ebenso wie bei der Auswahl der zehn zuerst eingeschalteten Verbraucher - von der Zufallszeit ab.

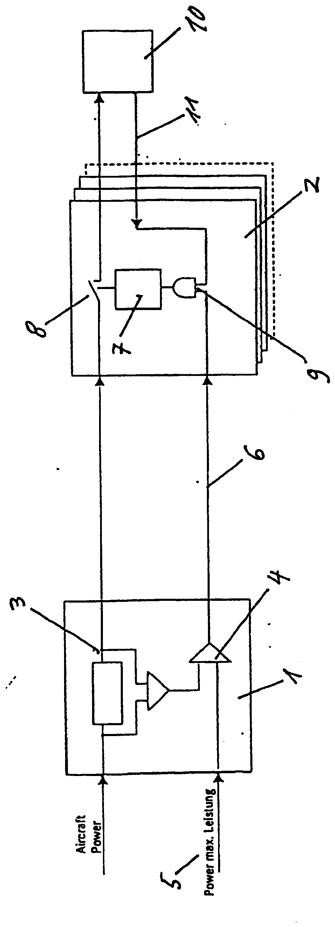

In der Zeichnung ist ein Ausführungsbeispiel nach der Erfindung in Form eines Blockschaltbildes dargestellt. Eine zentrale Leistungsverteilungs-Einheit 1, die von einer zeichnerisch nicht dargestellten zentralen Flugzeug-Stromversorgung (Aircraft Power) gespeist wird und die jeweils einem Flugzeugsitz zugeordnete dezentrale Stromversorgungseinheiten 2 mit elektrischer Leistung versorgt, weist eine Leistungsmessungseinrichtung 3 und eine Vergleichseinrichtung 4 auf. Die Leistungsmessungseinrichtung 3 dient zur Ermittlung der von den eingeschalteten Verbrauchern 10 abgenommenen elektrischen Leistung, die in der Vergleichseinrichtung 4 mit einer durch vorgegebene Grenzwerte einstellbarten Maximalleistung 5 (Power max. Leistung) verglichen wird. Während die Leistungsmessungseinrichtung 3 jeweils mit dem Schalter einer zufallsabhängigen Zeitverzögerungseinheit 7, die in jeder dezentralen Stromversorgungseinheit 2 zusammen mit jeweils einer Logikeinheit 9 angeordnet ist, elektrisch leitend verbunden sind, ist der Ausgang der Vergleichseinrichtung 4 mittels jeweils einer Statusleitung 6 an die bereits erwähnten Logikeinheiten 9 von jeweils einer dezentralen Stromversorgungseinheit 2 angeschlossen. In Abhängigkeit von einer gesetzten Statusleitung 6 schaltet eine zufällig ausgewählte dezentrale Stromversorgungseinheit 2 unter Verwendung ihrer zufallsabhängigen Zeitverzögerungseinheit 7, ihres Schalters 8 und ihrer Logikeinheit 9 die von Einheit 1 bereitgestellte Leistung auf den zugehörigen Verbraucher 10, z.B. einen Laptop. Hierbei ist vorgesehen, daß der Verbraucher 10 ein Anschluß-Kennungssignal an die Logikeinheit 9 der zugeordneten dezentralen Stromversorgungseinheit 2 gibt.

### Bezugszeichenliste

- 1: zentrale Leistungsverteilungs-Einheit
- 2: dezentrale Stromversorgungseinheit
- 3: Leistungsmessungseinrichtung
- 4: Vergleichseinrichtung
- 5: einstellbarten Maximalleistung
- 6: Statusleitung
- 7: zufallsabhängigen Zeitverzögerungseinheit
- 8: Schalter
- 9: Logikeinheit
- 10: Verbraucher
- 11: Statusleitung

## Patentansprüche

1. Vorrichtung zur Leistungsversorgung von elektrischen Verbrauchern (10), die an Sitzen in einem Flugzeug zugeordneten dezentralen Stromversorgungseinheiten (2) angeschlossen sind, unter Verwendung einer zentralen Leistungsverteilungs-Einheit (1), die von der zentralen Flugzeug-Stromversorgung gespeist wird und die die dezentralen Stromversorgungseinheiten (2) mit elektrischer Leistung versorgt, wobei eine Begrenzung der Anzahl von gleichzeitig eingeschalteten Verbrauchern (10) in Abhängigkeit von vordefinierten Lastgrenzen erfolgt, wobei die zentrale Leistungsverteilungs-Einheit (1) eine Leistungsmessungs- und eine Vergleichseinrichtung (3 bzw. 4) aufweist zur Ermittlung der von den jeweils einem Sitz zugeordneten eingeschalteten Verbrauchern (10) abgenommenen elektrischen Leistung zum Vergleich mit einer durch vorgegebene Grenzwerte einstellbaren Maximalleistung (5), **dadurch gekennzeichnet, dass**
- jede einem Sitzplatz zugeordnete dezentrale Stromversorgungseinheit (2) eine mit einem Schalter (8) und mit einer Schaltlogik (9) zusammenwirkende zufallsabhängige Zeitverzögerungseinheit (7) aufweist,
wobei die dezentrale Stromversorgungseinheit (2) derart angepasst ist, dass eine Freischaltung von mindestens einem an seine jeweilige dezentrale Stromversorgungseinheit (2) angeschlossenen Verbraucher (10) durch Setzen einer von dem Verbraucher (10) zu der Schaltlogik (9) der zugehörigen Stromversorgungseinheit (2) geführten Statusleitung (11) und, sofern die ermittelte Maximalleistung (5) noch nicht erreicht ist, nach Verstreichen einer von der jeweils zugehörigen Zeitverzögerungseinheit (7) vorgegebenen zufallsabhängigen Zeit erfolgt.

## Claims

1. Power supply device for electric consumers (10) which are connected to decentralised power supply units (2) associated with seats in an aircraft, using a central power distribution unit (1) which is supplied with electrical power by the central aircraft power supply and which supplies the decentralised power supply units (2) with electrical power, the number of consumers (10) which are connected at the same time being limited in accordance with predefined load limits, the central power distribution unit (1) having a power measurement device (3) and a comparison device (4) for establishing the electrical power consumed by the connected consumers (10) which are in each case associated with a seat for comparison with a maximum power (5) which can be adjusted by means of predetermined limit values, **characterised in that**
- each decentralised power supply unit (2) which is associated with a seat has a time delay unit (7) which operates in a random manner and which co-operates with a switch (8) and with a switching logic (9),
the decentralised power supply unit (2) being adapted in such a manner that at least one consumer (10) which is connected to the respective decentralised power supply unit (2) thereof is enabled by setting a status line (11) which is directed from the consumer (10) to the switching logic (9) of the associated power supply unit (2) and, if the established maximum power (5) has not yet been reached, after a randomly established time period which is predetermined by the associated time delay unit (7) has expired.

## Revendications

1. Dispositif d'alimentation en puissance d'utilisateurs électriques (10) qui sont connectés à des unités d'alimentation en courant (2) décentralisées, affectées à des sièges dans un avion, en utilisant une unité de distribution de puissance (1) centrale qui est alimentée par l'alimentation en courant centrale de l'avion et qui alimente en puissance électrique les unités d'alimentation en courant (2) décentralisées, avec limitation du nombre d'utilisateurs (10) mis en circuit simultanément, en fonction de limites de charge prédéfinies, l'unité de distribution de puissance (1) centrale comportant un dispositif de mesure de puissance et un dispositif de comparaison (3 et 4), destinés à déterminer la puissance électrique absorbée par les utilisateurs (10) mis en circuit, affectés respectivement à un siège, en vue d'une comparaison avec une puissance maximale (5) pouvant être réglée par des valeurs limites préétablies, **caractérisé par le fait que**
- chaque unité d'alimentation en courant (2) décentralisée, affectée à un siège, présente une unité de temporisation (7) aléatoire, coopérant avec un interrupteur (8) et une logique de commutation (9),
l'unité d'alimentation en courant (2) décentralisée étant adaptée de manière telle qu'une mise en circuit d'au moins un utilisateur (10) connecté à son unité d'alimentation en courant (2) décentralisée respective ait lieu, par activation d'une ligne d'état (11) menant de l'utilisateur (10) à la logique de commutation (9) de l'unité d'alimentation en courant (2) associée, et, dans la mesure où la puissance maximale (5) déterminée n'est pas encore atteinte, après écoulement d'un laps de temps aléatoire, prédéfini par l'unité de temporisation (7) associée respective.
